(19) **Europäisches Patentamt**

**European Patent Office**

**Office européen des brevets**

(11) **EP 1 178 617 B1**

(12) **EUROPEAN PATENT SPECIFICATION**

(45) Date of publication and mention
of the grant of the patent:
**26.05.2004 Bulletin 2004/22**

(51) Int Cl.7: **H04B 7/26**, H04J 13/06,
H04B 1/713

(21) Application number: **01301193.7**

(22) Date of filing: **12.02.2001**

(54) **Method for improving the performance of the GSM frequency hopping sequence generator for half/quarter rate channels**

Verfahren zur Verbesserung der Leistung eines GSM Erzeuger von Frequenzsprungsequenzen für Kanälen mit halb und viertel Rat

Méthode pour augmenter la performance d'un générateur de séquence de saut de fréquences pour canaux à demi ou quart de vitesse

(84) Designated Contracting States:
**DE FR GB IT**

(30) Priority: **02.08.2000 US 630510**

(43) Date of publication of application:
**06.02.2002 Bulletin 2002/06**

(73) Proprietor: **LUCENT TECHNOLOGIES INC.**
**Murray Hill, New Jersey 07974-0636 (US)**

(72) Inventor: **Huo, David Di**
**Newton, New Jersey 07860 (US)**

(74) Representative:
**Buckley, Christopher Simon Thirsk**
**Lucent Technologies Inc.,**
**5 Mornington Road**
**Woodford Green, Essex IG8 0TU (GB)**

(56) References cited:
**WO-A-96/36132**          **US-A- 5 719 857**

• **SALEH A A M ET AL: "INDOOR RADIO COMMUNICATIONS USING TIME-DIVISION MULTIPLE ACCESS WITH CYCLICAL SLOW FREQUENCY HOPPING AND CODING" IEEE JOURNAL ON SELECTED AREAS IN COMMUNICATIONS,US,IEEE INC. NEW YORK, vol. 7, no. 1, 1989, pages 59-70, XP000048610 ISSN: 0733-8716**

## Description

This invention relates to methods of assigning a carrier frequency to a communication channel of a plurality of communication channels defined by time slots within sequentially occurring frames.

A common transmission problem in mobile telephone systems is that of fading. This occurs as a result of the shadowing effect produced by buildings and natural obstacles such as hills located between the transmitting and receiving antennas of a mobile terminal and a base station. As the mobile terminal moves around, the received signal strength increases and decreases as a function of the type of obstacles which are that moment between the transmitting and receiving antennas.

Another type of signal degradation occurs when the broadcast signal takes more than one path from the transmitting antenna to the receiving antenna so that the receiving antenna of the mobile terminal receives not just one signal but several. One of these multiple signals may come directly from the receiving antenna while several others may be first reflected from buildings and other obstructions before reaching the receiving antenna and, thus, will be delayed slightly in phase from one another. The reception of several versions of the same signal shifted in phase from one another results in the vector sum of the signals being the resultant composite signal actually received at the receiving antenna. In some instances the vector sum of the received signal may be very low or even close to zero which can cause the received signal to virtually disappear.

In the case of digital radio systems such as those in which Time Division Multiple Access (TDMA) is used, a problem referred to as time dispersion can occur when a signal representing certain digital information is interfered with at the receiving antenna by a different, consecutively transmitted symbol due to reflections of the original signal from an object distant from the receiving antenna. In this instance the receiver has difficulty in accurately identifying the actual symbol that is being detected at that moment.

One technique used to compensate for transmission difficulties in a mobile telephone system is that of frequency hopping. Frequency hopping means that a mobile terminal sequentially communicates with a base station on different frequencies, the transmission frequency of both the mobile terminal and the base station changing between frames of information. A mobile terminal will generally use the same time slot of a frame, but will tune to a different frequency between each frame under the GSM standard. The base station receivers will also retune to the next frequency to match the frequency hop of the mobile terminal to maintain the communication link. It is to be noted that communications from the base station to the mobile terminal (the downlink) and communications from the mobile terminal to the base station (the uplink) are at different frequencies in GSM.

Thus, with frequency hopping, the radio transmission and reception are at one carrier frequency for one instant of time and then, a very short time later, the transmission and reception is hopped to a different frequency. When a transmitted radio signal is at a different carrier frequency, it is not subject to the same fading pattern because such patterns are normally frequency dependent and, therefor, different for different frequencies. For example, a stationary mobile terminal which may have very poor reception of one carrier frequency and have very good reception at a different carrier frequency. Thus, frequency hopping is used to further limit the amount of signal loss to a relatively short segment of the actual transmission time span.

One important aspect of frequency hopping is that the two or more carrier frequencies between which the signal is successively hopped must each be separated by a certain minimum amount in order to experience independent fading of the different frequencies. The frequencies between which the signals are hopped must be sufficiently different from one another so that if the received signal is weak for one frequency it should not be weak for the other frequency. If the two frequencies are very close together, it is more likely that the received signal will be weak due to fading of both frequencies. If, however, the two frequencies are separated from one another by a sufficiently large value, then it is less likely that each of the received signals will be weak at the same time.

In the current GSM system the traffic channels are intended to carry two types of user information streams: encoded speech and data. Two of the four types of traffic channels are defined as full rate and half rate. The access scheme is Time Division Multiple Access (TDMA) with eight basic physical channels per carrier. A physical channel is therefore defined as a sequence of TDMA frames, a time slot number (modulo 8) and a frequency hopping sequence for a given number of frequencies.

The main advantage of frequency hopping is to provide diversity on one transmission link and also to average the quality on all the communications through interferers diversity. Every mobile transmits its time slots according to a sequence of frequencies that it derives from an algorithm. The frequency hopping occurs between frames and, therefore, a mobile station transmits, or receives, on a fixed frequency during one time slot and then must hop before the time slot on the next TDMA frame. The frequency hopping sequences are orthogonal inside one cell, i.e., no collisions occur between communications of the same call; and, independent from one cell to a homologue cell, i.e., using the same set of RF channels or cell allocations.

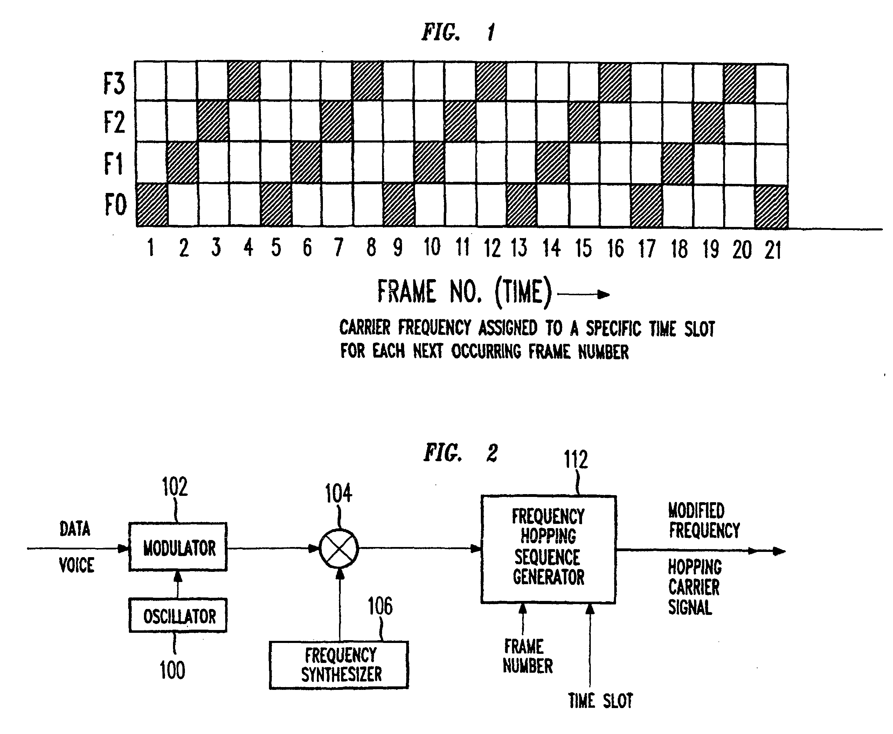

For full rate channel where, for example, four discrete carrier frequencies are used, the call information is transmitted at the first, second, third and fourth carrier frequencies during the first, second, third and fourth frames, respectively. Thereafter, for the fifth, sixth, seventh and eighth frames, the cycle is repeated with the call information being transmitted, again during the same time slot, at the first, second, third and fourth carrier frequencies respectively. Thus, for full rate channel, a plurality of discrete carrier frequency signals are assigned in repeating sequential order to the specific time slot of each next occurring frame. This hopping of the carrier frequency for each next occurring time slot is repeated until the call is terminated. FIG. 1 is a graphical illustration of a GSM full rate channel where the frequency hopping sequence uses four discrete carrier frequencies, F0, F1, F2 and F3, to transmit mobile call information on a common time slot for each next occurring frame.

Repeating, with frequency hopping, all information for a specific call is transmitted during the same time slot of each frame, but the carrier frequency for the time slot of each next occurring frame is changed to minimize interference and/of fading. In full rate channel, the same time slot of each next occurring frame is assigned to the same information channel. In half rate channel, the same time slot of every other (every second) frame is assigned to the same information channel rather than the same time slot of each successive frame.

During half rate channel, information for a call in progress is transmitted during a specific time slot of every other or second frame. Time slots of alternate occurring frames are skipped for that call. Referring to FIG. 1, for a specific time slot, for example, the first occurring time slot of frame 1, call information is transmitted at carrier frequency F0. Now, because the same time slot of every other frame is used, the next time slot that is used for the information channel is time slot 1 of the third frame which uses carrier frequency F2. Note, time slot 1 of frame 2 is not used and, therefore, carrier frequency F1 is bypassed. Thereafter, the next time slot used to carry the call information is in frame 5 which uses carrier frequeacy F0. The sequence of using the same time slot of every other frame to transmit the call information continues which results in frame numbers 1, 3, 5, 7, 9, 11, 13 ... being used to transmit call information on carrier frequencies F0, F2, F0, F2, F0, F2, F0 ..., respectively. Carrier frequency signals F1 and F3 are skipped and are not used, even though they are available for use.

Similarly, with quarter rate channel, where the time slot of every fourth frame is used to transmit call information, only the time slots of frame numbers 1, 5, 9, 17 ... are used to transmit the call information. In this instance, only carrier frequency F0 is used. All of the other available carrier frequencies, frequencies F1, F2 and F3, are not used.

Clearly, from the above example, when using four discrete carrier frequencies with a full rate channel, the call information is spread over four separate and discrete carrier frequencies to help reduce the effects of fading and/or signal degradation. But, with a half rate channel, the call information is carried on only two of the available four carrier frequencies. Two of the four available carrier frequencies are not used. With a quarter rate channel, the call information is transmitted on only one of the four available carrier frequencies. Three of the four available carrier frequencies are not used. Thus, half rate and quarter rate channels are not as effective as a full rate channel in reducing the effects of fading and/or signal degradation because all of the available carrier frequencies are not used.

A need exists for a new improved method of diminishing fading and/or signal degradation during frequency hopping at less than full rate.

WO 96/36132 discloses a method and system for multirate coding and detecting in a multiple access mobile communication. A transmitter selects a data transfer rate, and codes the transfer rate information to a transmitted signal by using a signal waveform, which is allocated to the transfer rate. At the receiving end, the signal waveform of the received signal is detected, and the transfer rate in the reception is selected according to the detected signal waveform.

According to this invention there is provided a method as claimed in claim 1.

The present invention solves the aforementioned problem of decreased signal performance which occurs during half rate and lower channel rate relative to a full channel rate by assigning one of a plurality of discrete carrier frequencies to a time slot of each occurring frame assigned to a specific information channel until each of the plurality of discrete carrier frequencies has been assigned at which time the cycle of assigning carrier frequencies to time slots is repeated.

In one embodiment, a carrier frequency is assigned to a communication channel in a communication system having communication channels defined by time slots within sequentially occurring frames. A position of a frame having a time slot assigned to the communication channel is determined and a carrier frequency belonging to a plurality of carrier frequencies is assigned to the time slot using one of a plurality of associations between frame positions and the plurality of carrier frequencies. One of the plurality of associations is selected for use in assigning the carrier frequency based on a communication rate used by the communication channel.

In yet another embodiment, a first association between frame positions and the plurality of carrier frequencies is used to assign a carrier frequency to a time slot when communicating at a first communication rate, and a second association between frame positions and the plurality of carrier frequencies is used to assign a carrier frequency to a time slot when communicating at a second communication rate.

In still another embodiment, the same carrier frequency may be assigned to more than one time slot in a frame.

## Brief Description of the Drawings

A more complete understanding of the method of the present invention may be obtained by reference to the following Detailed Description of the preferred embodiment(s) that follow, taken in conjunction with the accompanying drawings, characterized in that:

FIG. 1 is a diagram illustrating the relationship of four discrete carrier frequencies relative to frame position numbers for a common time slot; and
FIG. 2 is a block diagram of structure for generating frequency hopping carrier signals.

## Detailed Description

In a GSM system, in accordance with recommendation GSM 05-02 of June 1991, to which reference may be made, the digitally encoded voice channels are designed for authorizing either "full rate" or "half rate" channel. Data transmission may also be provided for "full rate" and "half rate" channel. As noted above, with full rate channel, the same time slot of every frame is assigned to a specific information channel. With half rate channel, the same time slot of every other frame is assigned to a specific information channel. Similarly, with quarter rate channel, the same time slot of every fourth frame is assigned to a specific information channel. The current GSM frequency hopping sequence generator is designed for full rate channel. Again, as noted above, the performance of the current system declines when less than full rate channel is used because the total number of carrier frequency signals available for use to transmit the voice or data information are not used. In the specific example given previously, with half rate channel, only two (F0 and F2) of the available four (F0, F1, F2, F3) carrier frequency signals are used. Thus, if carrier frequency F2 is subject to fading or interference, fifty percent of the call information can be compromised where only twenty-five percent of the call information would be compromised if all four carrier frequency signals are used to transmit the call information.

As GSM evolves into third generation where advanced technologies such as Enhanced Data GSM Evaluation Access Network (EDGE), Adaptive Multi Rate (AMR) and intelligent antenna are used, half rate channel will be used more frequently because capacity enhancement will become more important. The invention here disclosed enables, for the first time, a GSM system using less than full rate channel to achieve the same level of performance quality as is obtained for full rate channel provided the number of discrete carrier frequency signals available for use and the reciprocal of the channel code hopping rate have a common divisor. Thus, for example, where the number of discrete carrier frequency signals available for use is four, and the frequency hopping code rate is a half, then the common divisor is 2. Where the number of discrete carrier frequencies available for use is four and the frequency code rate is a quarter, the common divisor is also 2.

The GSM frequency hopping sequence generator, as defined in GSM 05-02, generates carrier frequencies using the system common frame number to increment every frame for a full rate channel. In these instances where the number of discrete carrier frequencies available for use, and the channel hopping rate have a common divisor, with this invention the same level of performance quality obtained for full rate channel can also be obtained for half rate and lower channel. This is obtained by dividing the position number of the upcoming frame (the frame number) by two, rounding the result down to the nearest integer if the result is not an integer and using the obtained integer as the new frame number to trigger the GSM frequency hopping sequence generator.

The relationship or association between frame positions and the carrier freuqencies for a half rate channel, is $f_n^1 = \frac{f_n}{2}$ where $f_n$ is the position number of the upcoming frame having a . time slot assigned to the information channel, $f_n^1$ is the position number of the frame that is to be used as the trigger signal for the sequence generator to generate the actual carrier frequency that is to be used for the upcoming time slot of frame $f_n$, and "2" is the divisor used for half (1/2) rate channel.

For quarter rate channel, the relationship becomes

$$f_n^1 = \frac{f_n}{4}$$

where "4" is the divisor for quarter (1/4) rate channel.

The generic relationship is

$$f_n^1 = \frac{f_n}{x}$$

where x is the channel rate. Thus, as noted above, for half rate channel, x is 2; and, for quarter rate channel x is 4.

As noted previously, with the prior art half rate channel, during frame numbers 1, 3, 5, 7, 9, 11, 13, 15, 17 ..., the carrier frequencies used to transmit call information for a specific information channel are F0, F2, F0, F2, F0, F2, F0, F2, F0 ..., respectively. Thus, with half rate channel, the prior art system uses only two of the available four carrier frequencies.

With the invention here disclosed, using the relationship $f_n^1 = \frac{f_n}{2}$ to determine the correct carrier frequencies, the carrier frequencies that will be used are F0, F0, F1, F2, F3, F0, F1, F2, F3 .... Clearly, with the invention here disclosed, at half rate channel, neither two, nor three, but all four of the carrier frequencies will be used.

In a similar manner it can be demonstrated that the results are even more dramatic with quarter rate channel where, with this invention, all four of the carrier frequencies are used, as opposed to the use of a single carrier frequency when the prior art system is used.

Referring to FIG. 2, there is illustrated a block diagram of structure for generating a frequency hopping carrier frequency modulated by voice or data information. A signal from oscillator 100 is modulated by a voice or data signal in modulator 102, the output of which is directed to an input terminal of multiplier 104. A second input terminal of multiplier 104 is coupled to receive a signal from frequency synthesizer 106. The output of multiplier 104 is coupled to an input of frequency hopping sequence generator 112. Two signals, a frame number signal and a time slot position signal are also directed to the frequency hopping sequence generator 112. The frequency hopping sequence generator tracks the time slot position, the frame number and the frequency hopping rate to generate the appropriate carrier frequency for each time slot of each frame number.

In operation, with half rate channel, each user is assigned a fixed time slot in every other frame. Referring to FIG. 1, a specific user will be assigned a fixed time slot in frame numbers 1, 3, 5, 7, 9, 11, 13 .... With this invention, the output signal of the frequency hopping sequence generator will increment carrier frequencies, for that time slot, of F0, F1, F2, F3, F0, F1, F2 ... for frame numbers 1, 3, 5, 7, 9, 11 13 ....

With quarter rate channel, each user is assigned a fixed time slot in every fourth frame number. In this instance, with this invention, the frequency hopping sequence generator 112 will generate carrier frequencies of F0, F1, F2, F3, F0, F1, F2... for the assigned time slot of frame numbers 1, 5, 9, 13, 17 .... As a result, the association between frame positions and carrier frequencies is (1, F0); (5, F1); (9, F2); (13, F3); (17, F0), (21, F1); ....

From the above, it can be seen that with this invention, the position of a frame having a time slot assigned to a communication channel is determined, and then a carrier frequency is assigned to the time slot using a first association between frame position and carrier frequencies when operating at one channel rate, and when operating at a different channel rate, a carrier frequency is assigned to the time slot using a different association between frame position and carrier frequencies. The selection of the appropriate carrier frequencies can be obtained from look up tables or from a processor programmed to associate frame positions with carrier frequencies based on a channel rate.

The invention here disclosed references systems such as a GSM system operating with cyclic hopping where the hopping pattern is repeated. It is to be noted that GSM has one cyclic hopping sequence, as referenced above, and 63 random hopping sequences. A random hopping sequence does not have a repetitive pattern. This invention is not restricted to the cyclic hopping sequence of GSM but also provides improved results for all random hopping sequences.

Although a preferred method of the present invention has been illustrated in the accompanying drawings and described in the foregoing detailed description, it is to be understood that the invention is capable of numerous rearrangements, modifications and substitutions without departing from the scope of the invention as set forth and defined by the following claims.

**Claims**

1. A method of assigning a carrier frequency to a communication channel of a plurality of communication channels defined by time slots within sequentially occurring frames, the method being **characterized by** the following steps:

   determining (112) a position of a frame (Frames 1-21) having a time slot assigned to the communication channel;
   assigning (112) a carrier frequency (F0, F1, F2,or F3) from a plurality of carrier frequencies (F0, F1, F2, and F3) to the time slot using one of a plurality of associations between frame positions and the plurality of carrier frequencies; and
   selecting (112) one of the plurality of associations to assign the carrier frequency based on a communication rate used by the communication channel.

2. A method as claimed in claim 1, wherein the step of assigning comprises using (112) a first association between frame positions (Frames 1-21) and the plurality of carrier frequencies (F0, F1, F2, and F3) if communicating at a first communication rate, and using (112) a second association between frame positions (Frames 1-21) and the plurality of carrier frequencies (F0, F1, F2, and F3) if communicating at a second communication rate.

3. A method as claimed in claim 1 or 2, wherein the step of assigning a carrier frequency (F0, F1, F2, or F3) from a plurality of carrier frequencies (F0, F1, F2, and F3) comprises assigning the carrier frequency to more than one time slot in the frame.

4. A method as claimed in claim 1, 2 or 3, wherein the step of assigning a carrier frequency (F0, F1, F2, or F3) from a plurality of carrier frequencies (F0, F1, F2, and F3) comprises:

   assigning (112) one of the plurality of carrier frequencies to a specific time slot of each successive frame; and
   assigning (112) the carrier frequencies assigned to the specific time slot of a frame (Frames 1-21) to the time slot of a subsequently occurring frame.

5. A method as claimed in claim 1, 2 or 3. wherein the step of assigning one of the plurality of carrier frequencies (F0, F1, F2, and F3) to a specific time slot comprises:

> determining (112) the position number of the next occurring frame having a time slot assigned to the specific information channel; and assigning (112) a normally occurring one of the plurality of carrier frequencies (F0, F1, F2, and F3) to a next occurring time slot of the next occurring less than full rate channel frame assigned to the specific information channel.

6. A method as claimed in claim 5, wherein the step of assigning (112) a normally occurring one of the plurality of carrier frequencies (F0, F1, F2, and F3) comprises:

> obtaining (112) a resultant by dividing the determined position number of the next occurring frame by two or four, and
> using (112) the resultant to obtain one of a plurality of carrier frequencies (F0, F1, F2, and F3) for the time slot of the next occurring frame.

7. A method as claimed in any one of claims 1 to 6, wherein the step of assigning a carrier frequency (F0, F1, F2, or F3) from a plurality of carrier frequencies (F0, F1, F2, and F3) comprises:

> determining (112) the position number of the next occurring frame having a time slot assigned to the specific information channel:

> > obtaining (112) a resultant by dividing the position number of the next occurring frame by a channel rate; and

> > using (112) the resultant to obtain one of a plurality of carrier frequencies (F0, F1, F2, and F3) for the time slot of the next occurring frame.

8. A method as claimed in any one of claims 1 to 7, wherein the step of assigning a carrier frequency (F0, F1, F2, or F3) from a plurality of carrier frequencies (F0, F1, F2. and F3) comprises:

> determining (112) the carrier frequency for the time slot of the next occurring frame assigned to the specific information channel from the relationship

$$f_n^1 = \frac{f_n}{x}$$

> where $f_n$ is the position number of the next occurring frame assigned to the specific information channel, x is the channel rate. and $f_n^1$ is the position number of the frame that is to be used in determining the actual carrier frequency that is to be used for the time slot of frame $f_n$.

9. A method as claimed in claim 8, comprising the step of rounding (112) the resultant for $f_n^1$ down to the nearest integer.

10. A method as claimed in claim 7, 8 or 9, comprising the step of selecting (112) the carrier frequency (F0, F1, F2, or F3) from a plurality of carrier frequencies (F0, F1, F2, and F3) which produces an integer if divided by the channel rate.

**Patentansprüche**

1. Verfahren zum Zuweisen einer Trägerfrequenz zu einem Kommunikationskanal einer Mehrzahl von durch Zeitschlitze in sequentiell auftretenden Rahmen definierten Kommunikationskanälen, **gekennzeichnet durch** folgende Schritte:

> Bestimmen (112) einer Position eines Rahmens (Rahmen 1-21) mit einem dem Kommunikationskanal zugewiesenen Zeitschlitz;

> Zuweisen (112) einer Trägerfrequenz (F0, F1, F2 oder F3) aus einer Mehrzahl von Trägerfrequenzen (F0, F1, F2 und F3) zu dem Zeitschlitz unter Verwendung einer von einer Mehrzahl von Zuordnungen zwischen Rahmenpositionen und der Mehrzahl von Trägerfrequenzen; und

> Auswählen (112) einer der Mehrzahl von Zuordnungen zum Zuweisen der Trägerfrequenz auf Grundlage einer vom Kommunikationskanal benutzten Kommunikationsrate.

2. Verfahren nach Anspruch 1, wobei der Schritt des Zuweisens das Verwenden (112) einer ersten Zuordnung zwischen Rahmenpositionen (Rahmen 1-21) und der Mehrzahl von Trägerfrequenzen (F0, F1, F2 und F3) umfaßt, wenn mit einer ersten Kommunikationsrate kommuniziert wird, und das Verwenden (112) einer zweiten Zuordnung zwischen Rahmenpositionen (Rahmen 1-21) und der Mehrzahl von Trägerfrequenzen (F0, F1, F2 und F3) umfaßt, wenn mit einer zweiten Kommunikationsrate kommuniziert wird.

**3.** Verfahren nach Anspruch 1 oder 2, wobei der Schritt des Zuweisens einer Trägerfrequenz (F0, F1, F2 oder F3) aus einer Mehrzahl von Trägerfrequenzen (F0, F1, F2 und F3) das Zuweisen der Trägerfrequenz zu mehr als einem Zeitschlitz im Rahmen umfaßt.

**4.** Verfahren nach Anspruch 1, 2 oder 3, wobei der Schritt des Zuweisens einer Trägerfrequenz (F0, F1, F2 oder F3) aus einer Mehrzahl von Trägerfrequenzen (F0, F1, F2 und F3) folgendes umfaßt:

Zuweisen (112) einer der Mehrzahl von Trägerfrequenzen zu einem bestimmten Zeitschlitz jedes aufeinanderfolgenden Rahmens; und

Zuweisen (112) der dem bestimmten Zeitschlitz eines Rahmens (Rahmen 1-21) zugewiesenen Trägerfrequenz zu dem Zeitschlitz eines danach auftretenden Rahmens.

**5.** Verfahren nach Anspruch 1, 2 oder 3, wobei der Schritt des Zuweisens einer der Mehrzahl von Trägerfrequenzen (F0, F1, F2 und F3) zu einem bestimmten Zeitschlitz folgendes umfaßt:

Bestimmen (112) der Positionsnummer des nächsten auftretenden Rahmens mit einem dem bestimmten Nutzkanal zugewiesenen Zeitschlitz; und

Zuweisen (112) einer normalerweise auftretenden der Mehrzahl von Trägerfrequenzen (F0, F1, F2 und F3) zu einem nächsten auftretenden Zeitschlitz des nächsten auftretenden Rahmens mit einem Kanal mit geringerer als voller Datenrate, der dem bestimmten Nutzkanal zugewiesen ist.

**6.** Verfahren nach Anspruch 5, wobei der Schritt des Zuweisens (112) einer normalerweise auftretenden der Mehrzahl von Trägerfrequenzen (F0, F1, F2 und F3) folgendes umfaßt:

Erhalten (112) eines Endwerts durch Teilen der bestimmten Positionsnummer des nächsten auftretenden Rahmens durch zwei oder vier; und

Benutzen (112) des Endwertes, um eine einer Mehrzahl von Trägerfrequenzen (F0, F1, F2 und F3) für den Zeitschlitz des nächsten auftretenden Rahmens zu erhalten.

**7.** Verfahren nach einem der Ansprüche 1 bis 6, wobei der Schritt des Zuweisens einer Trägerfrequenz (F0, F1, F2 oder F3) aus einer Mehrzahl von Trägerfrequenzen (F0, F1, F2 und F3) folgendes umfaßt:

Bestimmen (112) der Positionsnummer des nächsten auftretenden Rahmens mit einem dem bestimmten Nutzkanal zugewiesenen Zeitschlitz;

Erhalten (112) eines Endwerts durch Teilen der Positionsnummer des nächsten auftretenden Rahmens durch eine Kanal-Datenrate; und

Benutzen (112) des Endwertes, um eine einer Mehrzahl von Trägerfrequenzen (F0, F1, F2 und F3) für den Zeitschlitz des nächsten auftretenden Rahmens zu erhalten.

**8.** Verfahren nach einem der Ansprüche 1 bis 7, wobei der Schritt des Zuweisens einer Trägerfrequenz (F0, F1, F2 oder F3) aus einer Mehrzahl von Trägerfrequenzen (F0, F1, F2 und F3) folgendes umfaßt:

Bestimmen (112) der Trägerfrequenz für den Zeitschlitz des dem bestimmten Nutzkanal zugewiesenen nächsten auftretenden Rahmens aus dem Verhältnis

$$f_n^1 = \frac{f_n}{x}$$

wobei $f_n$ die Positionsnummer des dem bestimmten Nutzkanal zugewiesenen nächsten auftretenden Rahmens, x die Kanalbitrate und $f_n^1$ die Positionsnummer des Rahmens ist, der bei der Bestimmung der eigentlichen Trägerfrequenz zu benutzen ist, die für den Zeitschlitz des Rahmens $f_n$ zu benutzen ist.

**9.** Verfahren nach Anspruch 8 mit dem Schritt des Abrundens (112) des Endwerts für $f_n^1$ auf die nächste Ganzzahl.

**10.** Verfahren nach Anspruch 7, 8 oder 9 mit dem Schritt des Auswählens (112) der Trägerfrequenz (F0, F1, F2 oder F3) aus einer Mehrzahl von Trägerfrequenzen (F0, F1, F2 und F3), die eine Ganzzahl erzeugt, wenn sie durch die Kanalbitrate geteilt wird.

**Revendications**

**1.** Procédé d'attribution d'une fréquence porteuse à un canal de communication d'une pluralité de canaux de communication définis par des tranches de temps dans des trames se produisant séquentiellement, le procédé étant **caractérisé par** les étapes suivantes :

la détermination (112) de la position d'une trame (Trames 1 à 21) ayant une tranche de temps attribuée au canal de communication ; l'attribution (112) d'une fréquence porteuse (F0, F1, F2 ou F3) parmi une pluralité de fréquences porteuses (F0, F1, F2 et F3) à la tranche de temps en utilisant l'une d'une pluralité d'associations entre des positions de trames et la pluralité de fréquences porteuses ; et la sélection (112) de l'une de la pluralité d'associations pour attribuer la fréquence porteuse en fonction d'un débit de communication utilisé par le canal de communication.

2. Procédé selon la revendication 1, dans lequel l'étape d'attribution comprend l'utilisation (112) d'une première association entre des positions de trames (Trames 1 à 21) et la pluralité de fréquences porteuses (F0, F1, F2 et F3) en cas de communication à un premier débit de communication, et l'utilisation (112) d'une deuxième association entre des positions de trames (Trames 1 à 21) et la pluralité de fréquences porteuses (F0, F1, F2 et F3) en cas de communication à un deuxième débit de communication.

3. Procédé selon la revendication 1 ou 2, dans lequel l'étape d'attribution d'une fréquence porteuse (F0, F1, F2 ou F3) parmi une pluralité de fréquences porteuses (F0, F1, F2 et F3) comprend l'attribution de la fréquence porteuse à plus d'une tranche de temps dans la trame.

4. Procédé selon la revendication 1, 2 ou 3, dans lequel l'étape d'attribution d'une fréquence porteuse (F0, F1, F2 ou F3) parmi une pluralité de fréquences porteuses (F0, F2, F2 et F3) comprend :

l'attribution (112) de l'une de la pluralité de fréquences porteuses à une tranche de temps spécifique de chaque trame successive ; et l'attribution (112) des fréquences porteuses attribuées à la tranche de temps spécifique d'une trame (Trames 1 à 21) à la tranche de temps d'une trame se produisant ultérieurement.

5. Procédé selon la revendication 1, 2, ou 3, dans lequel l'étape d'attribution de l'une de la pluralité de fréquences porteuses (F0, F1, F2 et F3) à une tranche de temps spécifique comprend :

la détermination (112) du numéro de position de la trame se produisant ensuite ayant une tranche de temps attribuée au canal d'information spécifique ; et l'attribution (112) d'une fréquence se produisant normalement de la pluralité de fréquences porteuses (F0, F1, F2 et F3) à une tranche de temps se produisant ensuite de la trame se produisant ensuite à moins que le débit de canal maximum attribuée au canal d'information spécifique.

6. Procédé selon la revendication 5, dans lequel l'étape d'attribution (112) d'une fréquence se produisant normalement de la pluralité de fréquences porteuses (F0, F1, F2 et F3) comprend :

l'obtention (112) d'une résultante en divisant le numéro de position déterminé de la trame se produisant ensuite par deux ou quatre ; et l'utilisation (112) de la résultante afin d'obtenir l'une d'une pluralité de fréquences porteuses (F0, F1, F2 et F3) pour la tranche de temps de la trame se produisant ensuite.

7. Procédé selon l'une quelconque des revendications 1 à 6, dans lequel l'étape d'attribution d'une fréquence porteuse (F0, F1, F2 ou F3) parmi une pluralité de fréquences porteuses (F0, F1, F2 et F3) comprend :

la détermination (112) du numéro de position de la trame se produisant ensuite ayant une tranche de temps attribuée au canal d'information spécifique ; l'obtention (112) d'une résultante en divisant le numéro de position de la trame se produisant ensuite par un débit de canal ; et l'utilisation (112) de la résultante afin d'obtenir l'une d'une pluralité de fréquences porteuses (F0, F1, F2 et F3) pour la tranche de temps de la trame se produisant ensuite.

8. Procédé selon l'une quelconque des revendications 1 à 7, dans lequel l'étape d'attribution d'une fréquence porteuse (F0, F1, F2 ou F3) parmi une pluralité de fréquences porteuses (F0, F1, F2 et F3) comprend :

la détermination (112) de la fréquence porteuse pour la tranche de temps de la trame se produisant ensuite attribuée au canal d'information spécifique à partir de la relation

$$f_n^1 = \frac{f_n}{x}$$

où $f_n$ est le numéro de position de la trame se produisant ensuite attribuée au canal d'information spécifique, x est le débit de canal et $f_n^1$ est le numéro de position de la trame qui doit être utilisée dans la détermination de la fréquence porteuse réelle à utiliser pour la tranche de temps de la trame $f_n$.

9. Procédé selon la revendication 8, comprenant l'étape d'arrondi (112) de la résultante de $f_n^1$ au nombre entier inférieur le plus proche.

10. Procédé selon la revendication 7, 8 ou 9, comprenant l'étape de sélection (112) de la fréquence porteuse (F0, F1, F2 ou F3) parmi une pluralité de fréquences porteuses (F0, F1, F2 et F3) qui produit un nombre entier si elle est divisée par le débit de canal.

## FIG. 1

FRAME NO. (TIME) ⟶

CARRIER FREQUENCY ASSIGNED TO A SPECIFIC TIME SLOT
FOR EACH NEXT OCCURRING FRAME NUMBER

## FIG. 2

EP 1 178 617 B1